# EUROPEAN PATENT APPLICATION

(11) **EP 4 838 449 A1**
(43) Date of publication of application: **11.11.2026**
(21) Application number: 25211635.5
(22) Date of filing: 28.10.2025
(51) Int. Cl.: G06Q 30/0251, G06Q 30/0201, G06Q 30/0204, G06Q 30/0202, G06N 20/00

(54) **INFORMATION PROCESSING SYSTEM, PROGRAM, AND INFORMATION PROCESSING METHOD**

(30) Priority: 09.05.2025 JP 2025078621
(71) Applicant: FUJIFILM Business Innovation Corp., Minato-ku Tokyo (JP)
(72) Inventor: ASANO, Taishi, Tokyo (JP); SUZUKI, Takuma, Tokyo (JP); KISHIMOTO, Yasunari, Yokohama-shi, Kanagawa (JP); SASAKI, Kentaro, Tokyo (JP); MATSUKI, Shiori, Tokyo (JP); MARUYAMA, Yoji, Tokyo (JP); OGINO, Ken, Tokyo (JP)
(74) Representative: Becker Kurig & Partner Patentanwälte mbB

(57) **Abstract**

An information processing system includes a processor configured to: input information related to virtual human profiles constituting a population that has been generated in advance and resource information related to resources to a learning model and acquire a set of virtual human profiles extracted from the population; execute research on the resource with respect to the set; and output a result of the research.

## Description

### BACKGROUND OF THE INVENTION

### (i) Field of the Invention

The present invention relates to an information processing system, a program, and an information processing method.

### (ii) Description of Related Art

In marketing, in a case of developing a product, there is a method of virtually setting a specific persona and conducting research on the virtual persona. The advertising effect of the product in the real world is predicted based on a result of the research.

In marketing, the virtual human profile is referred to as a "persona". A persona as an individual may, as necessary, be examined and set with respect to various attributes including not only gender and age group, but also upbringing, educational background, work history, annual income, lifestyle, family composition, hobbies and preferences, special skills, and values. There is a need to set attributes that fit the product to be developed or the content of the research. It is considered that the clearer the attributes set for the persona, in other words, the more clearly the persona is defined, the higher the reliability of results of the research conducted on the persona.

### SUMMARY OF THE INVENTION

However, generating a large number of virtual human profiles serving as subjects of the research for each product by setting attributes for each of the virtual human profiles requires a huge amount of processing.

An object of the present disclosure is to make it possible to avoid generating a virtual human profile serving as a subject of research on a resource such as a product, each time the research is conducted.

According to a first aspect of the present disclosure, there is provided an information processing system including a processor configured to input information related to virtual human profiles constituting a population that has been generated in advance and resource information related to resources to a learning model and acquire a set of virtual human profiles extracted from the population; execute research on the resource with respect to the set; and output a result of the research.

In addition, according to a second aspect of the present disclosure, in the information processing system according to the first aspect, the processor may be configured to input, to the learning model, the information related to the virtual human profiles and the resource information together with narrowing information including statistical information related to the virtual human profiles and acquire a set of virtual human profiles extracted from the population.

In addition, according to a third aspect of the present disclosure, in the information processing system according to the second aspect, the processor may be configured to adjust the statistical information included in the narrowing information by referring to statistical information related to a prospective customer of the resources.

In addition, according to a fourth aspect of the present disclosure, in the information processing system according to the third aspect, the processor may be configured to set an importance of the statistical information related to the prospective customer that is used for adjusting the statistical information included in the narrowing information.

In addition, according to a fifth aspect of the present disclosure, in the information processing system according to the third or fourth aspect, the processor may be configured to acquire information output by inputting information related to the virtual human profiles constituting the set, the resource information, and the statistical information to the learning model, as appeal strength information indicating an appeal strength of the resources in an advertisement.

In addition, according to a sixth aspect of the present disclosure, in the information processing system according to the fifth aspect, the processor may be configured to input the resource information to the learning model after including search history information of the prospective customer in the resource information.

In addition, according to a seventh aspect of the present disclosure, in the information processing system according to the fifth or sixth aspect, the processor may be configured to execute the research by inputting the resource information and the appeal strength information to the learning model.

In addition, according to an eighth aspect of the present disclosure, in the information processing system according to the second aspect, the processor may be configured to acquire appeal strength information indicating an appeal strength of the resources in an advertisement, and generate advertisement information of the resources based on the resource information, the appeal strength information, and the result of the research.

In addition, according to a ninth aspect of the present disclosure, in the information processing system according to the eighth aspect, the processor may be configured to generate search keyword information based on the result of the research, and generate the advertisement information of the resources by referring to the search keyword information.

In addition, according to a tenth aspect of the present disclosure, in the information processing system according to the ninth aspect, the processor may be configured to acquire information output by inputting the resource information, the appeal strength information, and the result of the research to the learning model, as search intention information indicating a search intention for the resources, and acquire information output by inputting the search intention information to the learning model, as the search keyword information.

In addition, according to an eleventh aspect of the present disclosure, in the information processing system according to the eighth aspect, the processor may be configured to output comparison information that includes the statistical information used to generate the advertisement information and statistical information related to a prospective customer who has viewed the advertisement information in a comparable manner, and acquire information output by inputting the comparison information to the learning model, as analysis information of the advertisement information.

In addition, according to a twelfth aspect of the present disclosure, in the information processing system according to any one of the first to eleventh aspects, the processor may be further configured to set the number of virtual human profiles to be input to the learning model.

According to a thirteenth aspect of the present disclosure, there is provided a program causing a computer to execute a function of inputting information related to virtual human profiles constituting a population that has been generated in advance and resource information related to resources to a learning model and acquiring a set of virtual human profiles extracted from the population, a function of executing research on the resource with respect to the set, and a function of outputting a result of the research.

According to a fourteenth aspect of the present disclosure, there is provided an information processing method including inputting information related to virtual human profiles constituting a population that has been generated in advance and resource information related to resources to a learning model and acquiring a set of virtual human profiles extracted from the population, executing research on the resource with respect to the set, and outputting a result of the research.

According to the first aspect of the present disclosure, it is possible to avoid generating a virtual human profile serving as a subject of research on a resource, each time the research is conducted.

According to the second aspect of the present disclosure, it is possible to acquire a set of virtual human profiles by referring to the statistical information related to the virtual human profiles.

According to the third aspect of the present disclosure, it is possible to increase reliability of the statistical information.

According to the fourth aspect of the present disclosure, it is possible to set a degree to which the statistical information to be included in the narrowing information is adjusted according to the importance.

According to the fifth aspect of the present disclosure, it is possible to cause the learning model to generate the appeal strength information of the resources.

According to the sixth aspect of the present disclosure, it is possible to cause the learning model to generate the appeal strength information of the resources by further referring to the search history information.

According to the seventh aspect of the present disclosure, it is possible to cause the learning model to execute the research for the set.

According to the eighth aspect of the present disclosure, it is possible to generate the advertisement information based on the resource information, the appeal strength information, and the result of the research.

According to the ninth aspect of the present disclosure, it is possible to generate the advertisement information of the resources by referring to the search keyword.

According to the tenth aspect of the present disclosure, it is possible to generate the search keyword information used for generating the advertisement information by using the learning model.

According to the eleventh aspect of the present disclosure, it is possible to cause the learning model to generate an analysis result of the advertisement information.

According to the twelfth aspect of the present disclosure, it is possible to set the number of virtual human profiles referred to for generating the set.

According to the thirteenth aspect of the present disclosure, it is possible to avoid generating a virtual human profile serving as a subject of research on a resource, each time the research is conducted.

According to the fourteenth aspect of the present disclosure, it is possible to avoid generating a virtual human profile serving as a subject of research on a resource, each time the research is conducted.

### BRIEF DESCRIPTION OF THE DRAWINGS

Exemplary embodiment(s) of the present invention will be described in detail based on the following figures, wherein:
FIG. 1 is a block configuration diagram showing an information processing apparatus in the present exemplary embodiment;
FIG. 2 is a flowchart showing processing up to evaluation of an advertisement generated by executing virtual research in the present exemplary embodiment;
FIG. 3 is a diagram showing a screen display example used for generating product concept information in the present exemplary embodiment;
FIG. 4 is a diagram showing a display example in a case where an example of external data used for generating segment information in the present exemplary embodiment is displayed on a screen;
FIG. 5 is a diagram showing a screen display example in a case where statistical information without reflecting external data and statistical information after reflecting external data are displayed in a graph format in the present exemplary embodiment;
FIG. 6 is a diagram showing a display example of a confirmation screen of the segment information in the present exemplary embodiment;
FIG. 7 is a diagram showing a display example of a final confirmation screen of the segment information in the present exemplary embodiment;
FIG. 8 is a diagram showing a display example of a setup screen in a case of generating a persona pool in the present exemplary embodiment;
FIG. 9 is a diagram showing a display example of a persona pool generation completion screen in the present exemplary embodiment;
FIG. 10 is a diagram showing a display example of an issue/appeal axis setting screen in the present exemplary embodiment;
FIG. 11 is a diagram showing a display example of a screen for displaying an execution result of virtual research in the present exemplary embodiment;
FIG. 12 is a diagram showing an example of screen display generated based on the execution result of the virtual research in the present exemplary embodiment;
FIG. 13 is a diagram showing another example of screen display showing the execution result of the virtual research in the present exemplary embodiment;
FIG. 14 is a diagram showing a screen display example of personal information related to a persona selected from the screen shown in FIG. 13;
FIG. 15 is a diagram showing a screen display example for a user to select search intention information in the present exemplary embodiment;
FIG. 16 is a diagram showing a screen display example for the user to select keyword information in the present exemplary embodiment;
FIG. 17 is a diagram showing a screen display example for the user to select advertisement information used for advertisement placement in the present exemplary embodiment; and
FIG. 18 is a diagram showing a screen display example of a policy analysis report including comparison information generated by analyzing information related to a response of a prospective customer to an advertisement in the present exemplary embodiment.

### DETAILED DESCRIPTION OF THE INVENTION

Hereinafter, an exemplary embodiment of the present invention will be described with reference to the accompanying drawings.

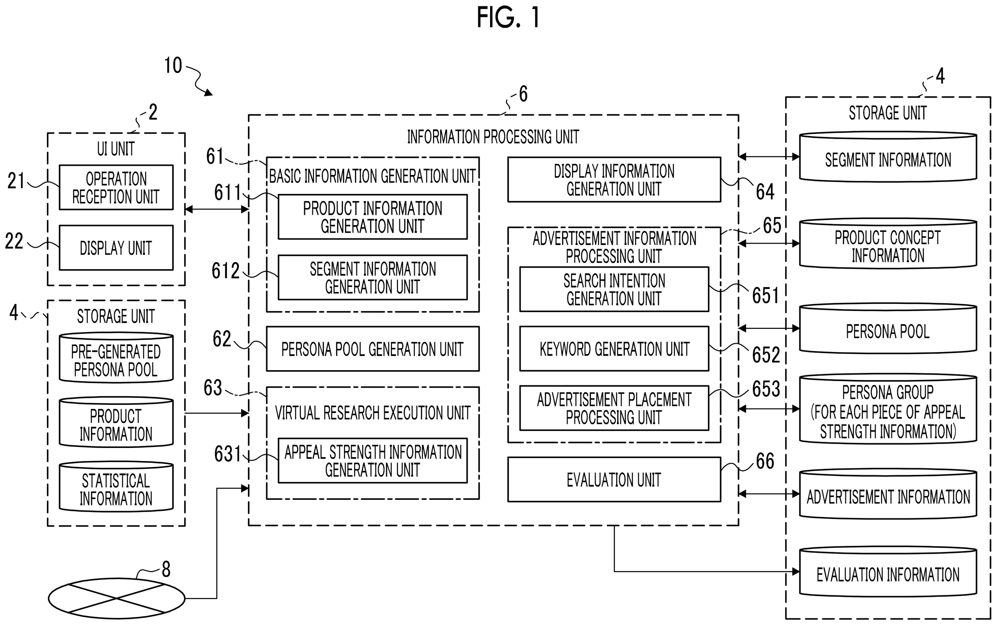

FIG. 1 is a block configuration diagram showing an information processing apparatus 10 in the present exemplary embodiment. The information processing apparatus 10 is one exemplary embodiment of an information processing system according to the exemplary embodiment of the present invention. The information processing apparatus 10 in the present exemplary embodiment can be implemented by the existing general-purpose hardware configuration, such as a personal computer (PC). That is, the information processing apparatus 10 includes a processor, a ROM, a RAM, a hard disk drive as storage means, a network interface provided as communication means, and a user interface including input means such as a mouse or a keyboard and display means such as a display.

In the present exemplary embodiment, research is conducted on a product or an advertisement, which is an example of a resource, with the persona as a research subject. The "resource" includes both tangible and intangible objects, and includes, in addition to a product, items not intended for sale, such as blog articles and videos uploaded to social networking services (SNS). The "product" is an example of the resource and can be defined as goods (for example, articles) and services intended for sale. As described above, in a case of developing and providing a product in marketing, there is a method of virtually setting a specific persona of a so-called target customer (also referred to as a "prospective customer") representing what type of customer is generally targeted, and conducting research. In the present exemplary embodiment, a virtual human profile serving as a subject of the research is referred to as a "persona". In addition, research conducted on a virtual human profile called a persona is called "virtual research". In some cases, a questionnaire is conducted with respect to a persona, which is referred to as a "virtual questionnaire". Since the "virtual questionnaire" is similar to the "virtual research" in that a response is obtained from the persona, in the present exemplary embodiment, the "virtual research" and the "virtual questionnaire" are collectively referred to as "virtual research".

FIG. 1 shows a user interface (UI) unit 2, a storage unit 4, an information processing unit 6, and a network 8. The user interface (UI) unit 2 is implemented by the above-described user interface. The storage unit 4 is implemented by storage means such as the above-described hard disk drive. The information processing unit 6 is implemented by a cooperative operation of a processor and a program that operates on the processor. The information processing apparatus 10 is connected to a network 8 such as the Internet or a LAN via a network interface. The storage means is not limited to the storage unit 4 mounted in the information processing apparatus 10, and storage means connected via the network 8 may be used.

The user interface (UI) unit 2 includes an operation reception unit 21 that receives a user operation via the input means, and a display unit 22 that displays various types of information on the display means.

Various types of information are stored in the storage unit 4 as shown in FIG. 1. Among these, a pre-generated persona pool, product information, and statistical information are used as inputs for information processing described below. Among these, the product information and the statistical information may be acquired from the outside via the Internet or the like as necessary even without being saved in advance in the storage unit 4. The remaining information stored in the storage unit 4 will be described together with the description of the processing.

The information processing unit 6 includes a basic information generation unit 61, a persona pool generation unit 62, a virtual research execution unit 63, a display information generation unit 64, an advertisement information processing unit 65, and an evaluation unit 66. In the present exemplary embodiment, components other than the display information generation unit 64 use generative AI, such as a large-scale language model (LLM) or a small-scale language model (SLM), as a predetermined learning model.

The research normally clearly defines the product and the target, that is, who will be researched for what product. The basic information generation unit 61 identifies the product and the target person, that is, the persona in the present exemplary embodiment. That is, the basic information generation unit 61 generates product information through a product information generation unit 611 and generates segment information through a segment information generation unit 612, as basic information used for generating a persona pool. The product information generated by the product information generation unit 611 is also referred to as "product concept information" in the present exemplary embodiment, but a relationship between the product information and the product concept information will be described below.

The persona pool generation unit 62 acquires a set of personas output by inputting information related to personas set in the pre-generated persona pool and product information related to products to a predetermined first learning model. In the present exemplary embodiment, the set of personas extracted from the pre-generated persona pool is referred to as a "persona pool".

Here, the term "pre-generated persona pool" refers to a population of personas generated in advance. The pre-generated persona pool is, for example, a set of personas created in advance based on Japan's population distribution, and is positioned as a population of personas. For example, the pre-generated persona pool may be composed of about 30,000 personas. In the present exemplary embodiment, as attribute items indicating the population distribution, age, gender, presence or absence of children, and household income are exemplified and specifically described; however, other attribute items may also be used. Specific values of these attribute items are attributes representing the persona.

In the present exemplary embodiment, since it is assumed that product advertising within Japan will be considered, a pre-generated persona pool generated using actual statistical information of Japan's population distribution is used as a population of personas. Note that collecting the statistical information does not have to be limited to Japan. For example, depending on a product to be researched, a pre-generated persona pool generated using statistical information limited to a domestic range, such as within Tokyo, a plurality of prefectures, or the Kanto region, may be used, or a pre-generated persona pool generated using statistical information obtained by expanding the range, such as Asia including Japan, may be used. The pre-generated persona pool used may be a population of personas generated without using the statistical information.

In addition, in the present exemplary embodiment, predetermined first to sixth learning models are used as described below. Further, the learning models are also used in generating some information. As these learning models, the same generative AI may be used, or different generative AI may be used depending on the characteristics of information being handled. In the present exemplary embodiment, generative AI is used, but it is optional as to which generative AI to use.

The virtual research execution unit 63 executes virtual research, as research on the persona pool, with respect to a product to be researched. Incidentally, the subject of the "virtual research" is a persona, which is a virtual persona. The term "product to be researched" refers to a product that is a subject of inquiry in the research conducted on the persona to be researched.

The virtual research execution unit 63 includes an appeal strength information generation unit 631. The appeal strength information generation unit 631 acquires information output by inputting information related to the personas constituting the persona pool, product information of the product to be researched, and segment information described below to a predetermined second learning model, as appeal strength information indicating an appeal strength of the product in an advertisement. In the present exemplary embodiment, issues and appeal axes are handled as the appeal strength information. The term "issue" refers to an issue for the consumer that the product attempts to address. The term "appeal axis" refers to a selling point or strength that is highly effective in stimulating user's willingness to purchase the product in a case of advertising the product.

The virtual research execution unit 63 executes the virtual research by inputting the product information and the appeal strength information of the product to be researched to a predetermined third learning model. Then, the virtual research execution unit 63 acquires the output from the third learning model as an execution result of the virtual research.

The display information generation unit 64 generates display information for displaying the execution result of the virtual research, in other words, the result of the research in various display forms. The display unit 22 displays the display information generated by the display information generation unit 64 on a display. An output destination of the research result is not limited to the display, and may be saved in the storage unit 4 in a file format, or may be provided to the outside via the network 8.

The advertisement information processing unit 65 executes processing related to the advertisement. Specifically, the advertisement information processing unit 65 acquires the appeal strength information of the product in the advertisement, and generates advertisement information of the product based on the product information, the appeal strength information, and the research result of the product. In addition, the advertisement information processing unit 65 places an advertisement based on the generated advertisement information. The advertisement information processing unit 65 includes a search intention generation unit 651, a keyword generation unit 652, and an advertisement placement processing unit 653.

The search intention generation unit 651 acquires information output by inputting the product information related to the product, the appeal strength information of the product, and the execution result of the virtual research to a predetermined fourth learning model, as search intention information indicating a search intention for the product. The keyword generation unit 652 acquires information output by inputting the search intention information generated by the search intention generation unit 651 to a predetermined fifth learning model, as search keyword information. The advertisement placement processing unit 653 executes processing to actually display the advertisement on a medium or the like based on the generated advertisement information.

The evaluation unit 66 evaluates the advertisement generated by the advertisement information processing unit 65. Specifically, the evaluation unit 66 outputs comparison information that includes statistical information used to generate the advertisement information, that is, segment information, and statistical information related to a prospective customer who has viewed the advertisement information in a comparable manner. Further, the evaluation unit 66 acquires information output by inputting the comparison information to a predetermined sixth learning model, as analysis information of the advertisement information.

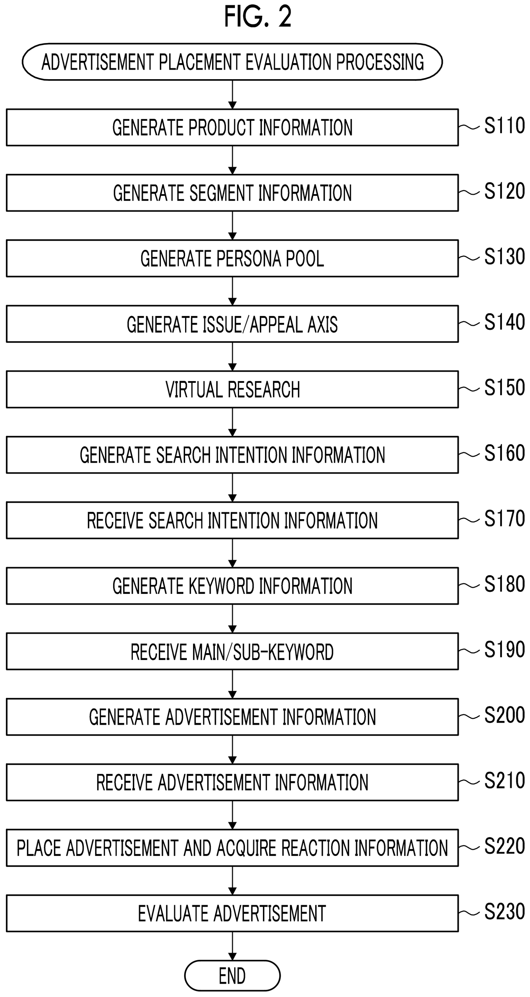

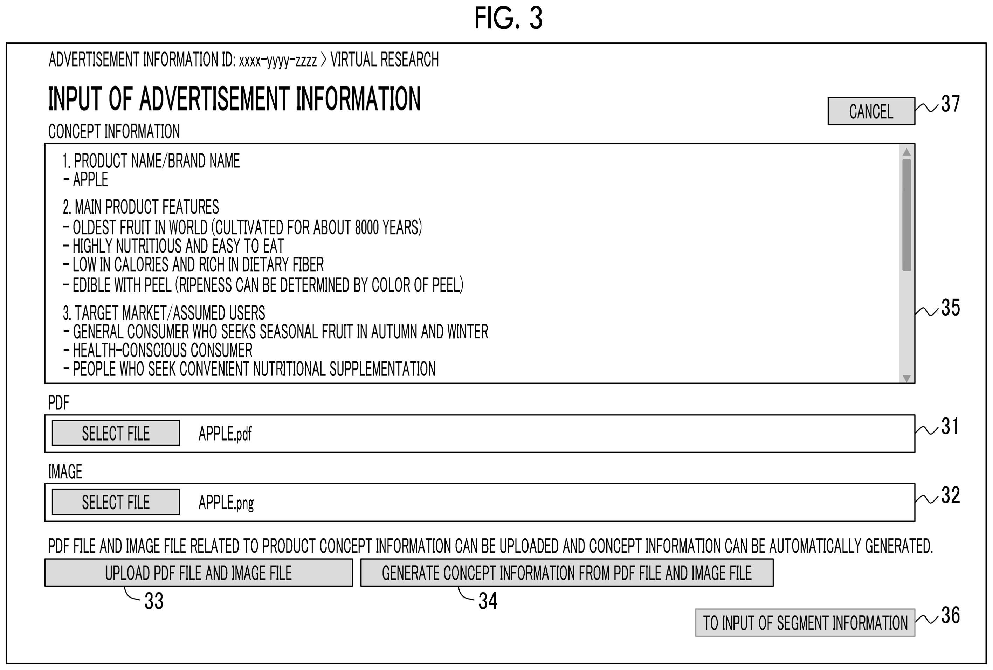

Hereinafter, an operation of the present exemplary embodiment will be described. In the present exemplary embodiment, processing performed up to executing the virtual research on a set of personas, that is, personas constituting the persona pool, generating the advertisement based on the execution result, placing the advertisement, and evaluating the advertisement will be described with reference to a flowchart shown in FIG. 2 and screen display examples shown in FIGS. 3 to 18.

The pre-generated persona pool described above will be described as being already generated. In addition, as described above, learning levels including the first to sixth learning models are used, and these will be referred to as "generative AI" for convenience in the following description.

First, the product information generation unit 611 generates product information to be input to the generative AI (step S110).

In the present exemplary embodiment, the information related to the product is referred to as "product information", but two types of information are handled as the product information. One is the product information to be input to the generative AI that generates the persona pool, and the other is the product information used to generate the product information to be input into the generative AI. The former product information will be referred to as "product concept information" or simply "concept information" in the following description. In FIG. 1, the former product information is shown as "product concept information", and the latter product information is shown as "product information". The latter product information is information related to the product for generating the product concept information, and is, for example, information describing features, specifications, and functions of the product, such as a product catalog or a landing page. In FIG. 1, the product information is stored in the storage unit 4, and may be acquired from the outside via the network 8.

Incidentally, in the present exemplary embodiment, the former product information is input to the generative AI, and the output is acquired as the latter product information, that is, the product concept information clearly expressing the concept of the product. The generative AI that generates the product concept information may use the same generative AI as the first learning model, such as an LLM.

FIG. 3 is a diagram showing a screen display example used for generating the product concept information in the present exemplary embodiment. The user designates, in predetermined designation regions 31 and 32, file names of a PDF file and an image file related to the former product information (hereinafter, also referred to as "original information" for convenience of description) for generating the product concept information. Thereafter, by selecting an upload button 33, the files designated in the designation regions 31 and 32 are uploaded. Thereafter, in a case where a generation button 34 is selected, the product information generation unit 611 inputs the uploaded files to the generative AI. Then, the product information generation unit 611 acquires the output from the generative AI as the concept information. That is, the product information generation unit 611 generates the concept information by using the generative AI. The generated concept information is displayed in a display region 35. The user may edit the concept information displayed in the display region 35. Alternatively, the user may manually input the concept information in the display region 35 without using the original information.

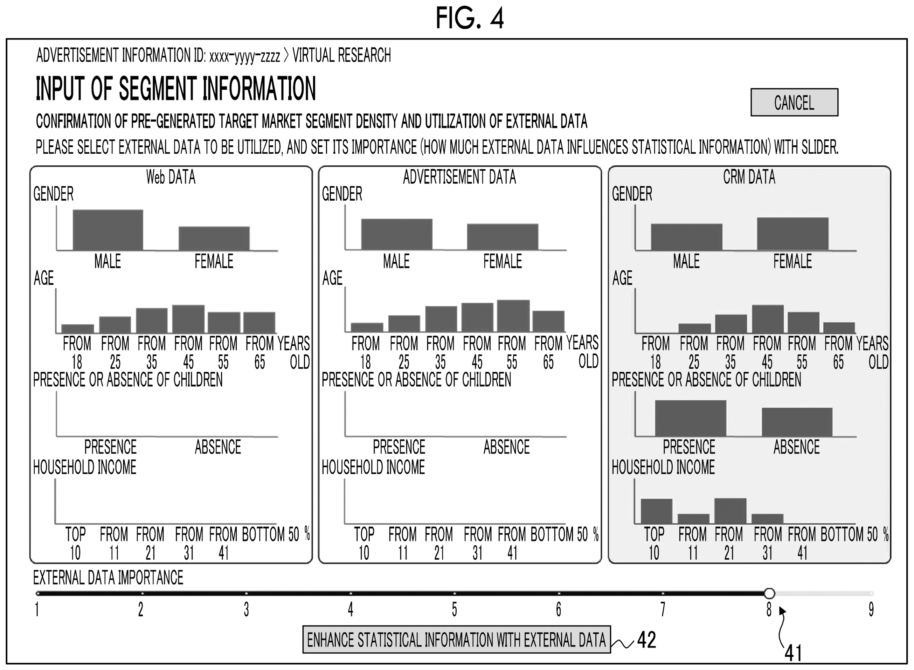

The concept information is generated in the manner described above, but, in a case where the content of the concept information is acceptable, the user selects a button 36 for shifting the processing to the input of the segment information. The user can cancel this processing by selecting a "Cancel" button 37. Similarly, in each screen (FIG. 4 and the like) described below in which the "Cancel" button is displayed, the user can cancel the processing as necessary.

Incidentally, in the present exemplary embodiment, in a prompt input to the generative AI for generating the concept information, it is instructed to output a product name, three to five major product information items, the target market and expected users, as well as a price range, a major unique selling position (USP) of the product, and information on campaigns and promotions.

In the present exemplary embodiment, the processing is performed to generate the concept information by using the generative AI, but the processing may be performed to directly input the original information to the generative AI.

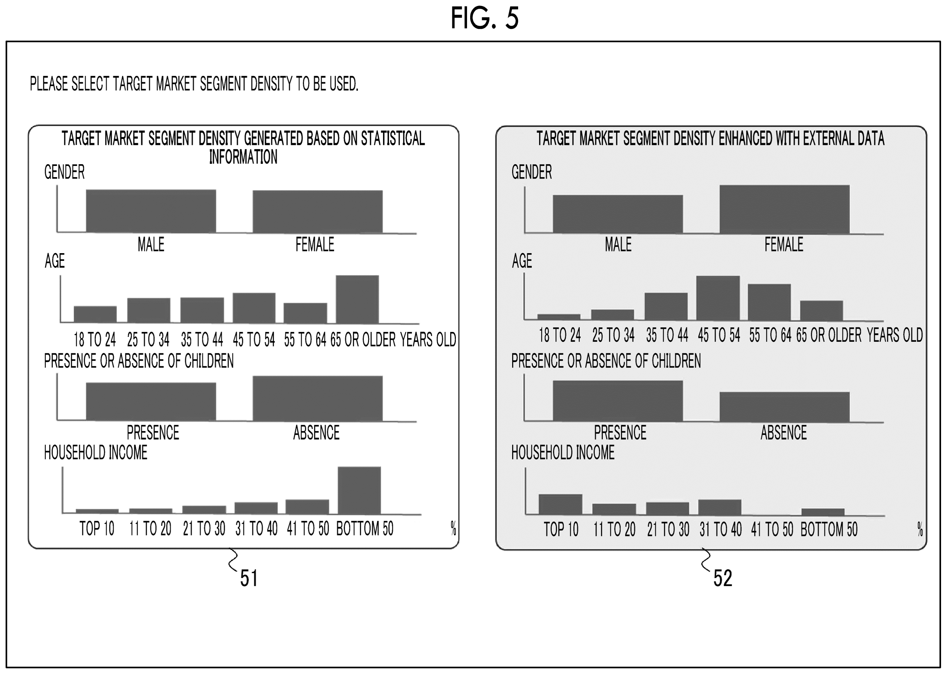

Subsequently, the segment information generation unit 612 generates segment information to be input to the generative AI (step S120). The segment information will be described with reference to FIGS. 4 and 5.

FIG. 4 is a diagram showing an example of external data used for generating the segment information. In addition, FIG. 5 is a diagram showing a graph 51 of the statistical information without reflecting the external data on a left side and a graph 52 of the statistical information after reflecting the external data on a right side.

In a case where the pre-generated persona pool is generated, statistical information related to Japan's population distribution is used. By performing statistical processing on the pre-generated persona pool as a processing target, statistical information related to the personas constituting the pre-generated persona pool, that is, statistical information related to the population distribution of the personas can be obtained. In the present exemplary embodiment, this statistical information is represented in the graph 51 on the left side, entitled "target market segment density generated based on statistical information" in FIG. 5. As described above, in the present exemplary embodiment, as attribute items indicating the population distribution, age, gender, presence or absence of children, and household income are exemplified. In the following description, the statistical information related to the population distribution of the personas constituting the pre-generated persona pool will also be referred to as "original statistical information".

The original statistical information may be used as is as the statistical information in the subsequent processing. Note that, in a case where the product to be researched has already been provided to the market, companies can obtain access information (hereinafter, "Web data") to actual public information related to the product, access information (hereinafter, "advertisement data") to the advertisement of the product, and information (hereinafter, "CRM data") related to customer relationship management (CRM). The Web data, the advertisement data, and the CRM data are information obtained as a result of supplying the product to the outside, and are collectively referred to as "external data" in the following description. The "external data" can basically be statistical information related to a so-called prospective customer who has accessed information such as the advertisement because the person is interested in or concerned with the product to be researched. Since the customer who has actually purchased the product may also become a repeat customer who makes repurchases, in the present exemplary embodiment, the repeat customers are broadly construed to be added to prospective customers and collectively referred to as "prospective customers". It is considered that companies can further improve the accuracy of the statistical information used in the present exemplary embodiment by referring to the external data and reflecting the external data in the original statistical information. In the present exemplary embodiment, the statistical information reflecting the external data is represented in the graph 52 on the right side, entitled "target market segment density enhanced with external data" in FIG. 5. In the present exemplary embodiment, in order to distinguish the statistical information reflecting the external data from the original statistical information, the statistical information used in the subsequent processing is particularly referred to as "segment information". The segment information generation unit 612 generates the segment information by adjusting statistical information included in narrowing information to be input to the generative AI in the subsequent processing by referring to the statistical information related to the prospective customer of the product, that is, the external data.

In FIG. 4, three types of external data are exemplified. Then, an importance can be set for each piece of external data. For example, one of the three types of external data is selected. In FIG. 4, the colored graph indicates a state in which the CRM data is selected in response to a user operation. Then, the importance can be set for each piece of external data by sliding a slider 41 below the graph. Incidentally, the "importance" refers to a frequency indicating the importance of the external data used for adjusting the original statistical information. The higher the importance, the more the external data influences the generation of the segment information. That is, the value of the external data is likely to be reflected in the segment information. The segment information generation unit 612 sets the importance of the external data used for adjusting the segment information included in the narrowing information to be input to the generative AI in the subsequent processing in accordance with the setting made by the user's operation on the slider 41.

After the importance of the external data is set by the user, the segment information generation unit 612 generates the segment information in response to selection of a button 42 for enhancing the statistical information in FIG. 4.

The statistical information handled in the present exemplary embodiment is represented by an absolute value (in FIG. 4, the number of persons) as a statistical result, but this is an example, and other types of data, for example, data represented by a percentage (%) may be used.

Incidentally, there may be cases where the user who has referred to the segment information generated by reflecting the external data in the above manner wants to make further adjustments. Therefore, in the present exemplary embodiment, a function of further adjusting the segment information is provided.

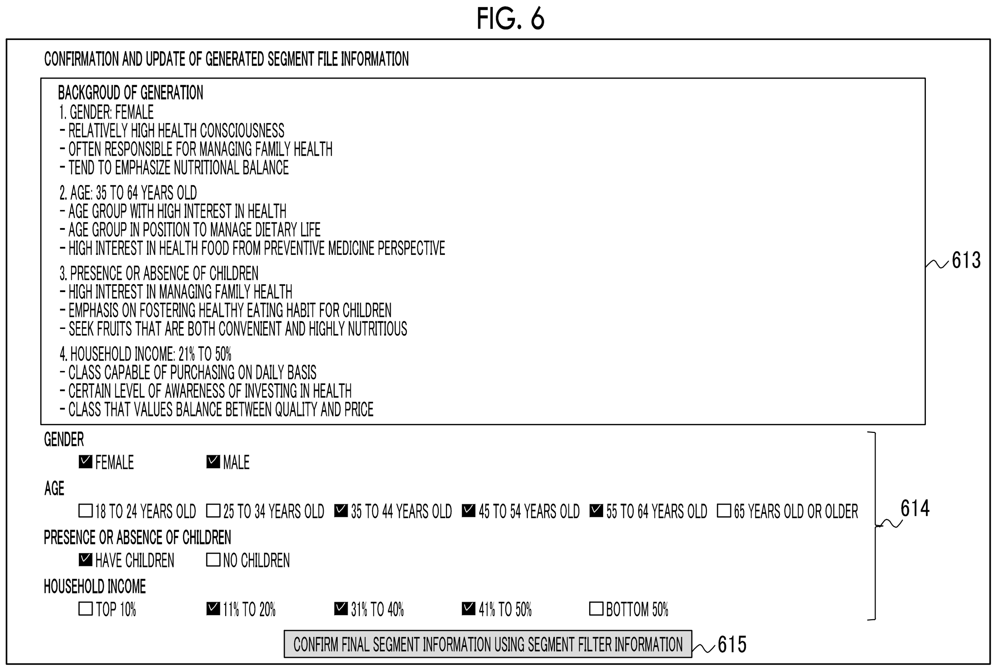

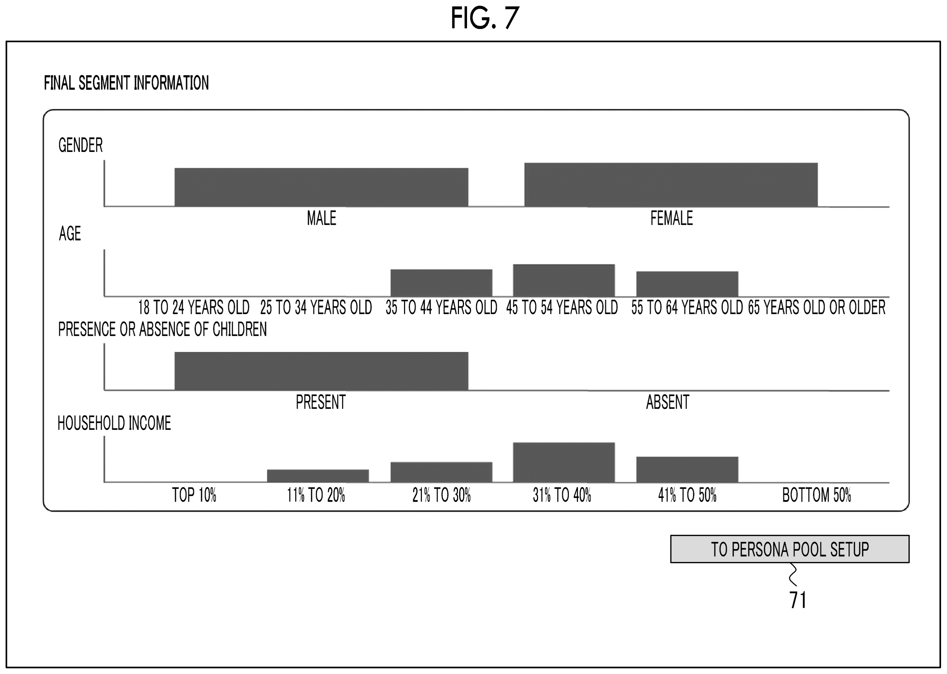

FIG. 6 is a diagram showing a display example of a confirmation screen of the segment information. The segment information is displayed in a display region 613 in FIG. 6. Since the segment information is obtained by filtering the original statistical information, the segment information is displayed as "segment filter information" for convenience in FIG. 6. In addition, the segment information generation unit 612 generates the segment information by using the generative AI, but reasons for defining the segment and the like are also displayed. In a case where the user wants to change the segment information by referring to the reasons displayed in the display region 613, the user checks or unchecks a checkbox corresponding to an appropriate segment in a setting region 614. Thereafter, in a case where the user selects a final confirmation button 615, the segment information generation unit 612 generates segment information reflecting the setting made by the user's check, and displays the segment information on a final confirmation screen. A display example of the final confirmation screen is shown in FIG. 7.

Strictly speaking, the information to be displayed on the display may be generated by the display information generation unit 64 and displayed on the display unit 22, but, for the sake of simplicity, it is described that the segment information generation unit 612 displays the information. The same applies to the following description.

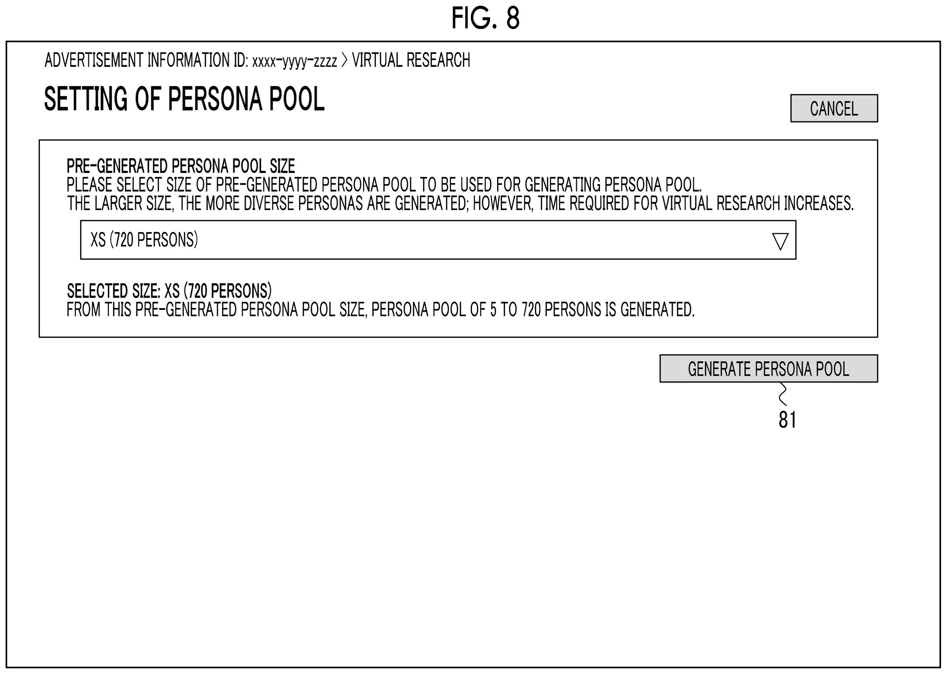

In a case where the user selects a persona pool setup button 71 on the screen shown in FIG. 7, the persona pool generation unit 62 starts a process of generating the persona pool (step S130). In a case where the process of generating the persona pool is started, the persona pool generation unit 62 first displays a setup screen shown in FIG. 8. The user designates the number of personas constituting the pre-generated persona pool from the setup screen shown in FIG. 8. That is, the number of persons equal to or less than the number designated by the user from this screen is extracted as the persona pool. FIG. 8 shows an example in which XS (720 persons) is designated, and shows a display example informing the user that the persona pool is made up of personas of 5 to 720 persons.

In the present exemplary embodiment, the maximum number of personas to be extracted from the pre-generated persona pool is set in advance with the number of personas constituting the pre-generated persona pool as the maximum value. FIG. 8 shows an example in which the user selects XS (720 persons) from a plurality of stages. As the plurality of stages, in addition to XS (720 persons), for example, S (1440 persons), M (2880 persons), L (5960 persons), and XL (11920 persons) are prepared. The number of stages and the number of persons in each level can be optionally determined. Alternatively, the user may be able to designate the number of persons. As the information is shown on the screen shown in FIG. 8, the load required for processing using the persona pool, such as the virtual research, varies depending on the number of persons designated on this screen. That is, for example, in a case of the virtual research, the number of personas to be researched increases as the number of persons increases, so that the processing load is relatively high, but the reliability of the research result is relatively high. On the other hand, the number of personas to be researched decreases as the number of persons decreases, so that the processing load is relatively low, but the reliability of the research result is relatively low. In the present exemplary embodiment, a configuration is adopted in which the number of personas constituting the pre-generated persona pool can be set, but, in another form, a configuration may be adopted in which the number of personas to be extracted from the pre-generated persona pool can be set.

In a case where the user selects a persona pool generation button 81, the persona pool generation unit 62 outputs up to 720 personas by inputting, to the generative AI, the narrowing information including the information related to the personas constituting the pre-generated persona pool, the product concept information, the segment information, and the maximum number of persons designated on the setup screen. That is, the persona pool generation unit 62 acquires a set of virtual human profiles extracted from the pre-generated persona pool by the generative AI, as the persona pool. The information input to the generative AI is collectively referred to as "narrowing information" in order to have a meaning of information for narrowing down the personas to be extracted from the pre-generated persona pool in order to generate the persona pool.

Incidentally, in the present exemplary embodiment, in a prompt input to the generative AI for generating the persona pool, it is instructed to refer to the product concept information, select a target segment most appropriate for the product from the segment information (for example, male or female in a case of gender), and output reasons for the selection in a bullet-point format.

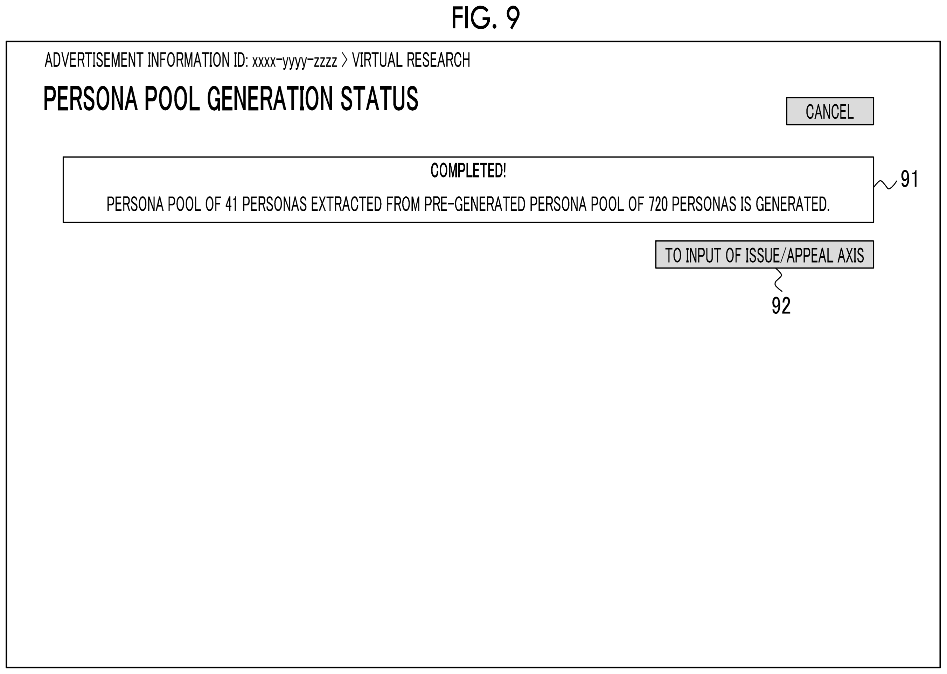

In a case where the persona pool generation unit 62 generates the persona pool in the above manner, a persona pool generation completion screen shown in FIG. 9 is displayed. From a display region 91 of the screen shown in FIG. 9, the user can see that the number of personas constituting the persona pool is 41.

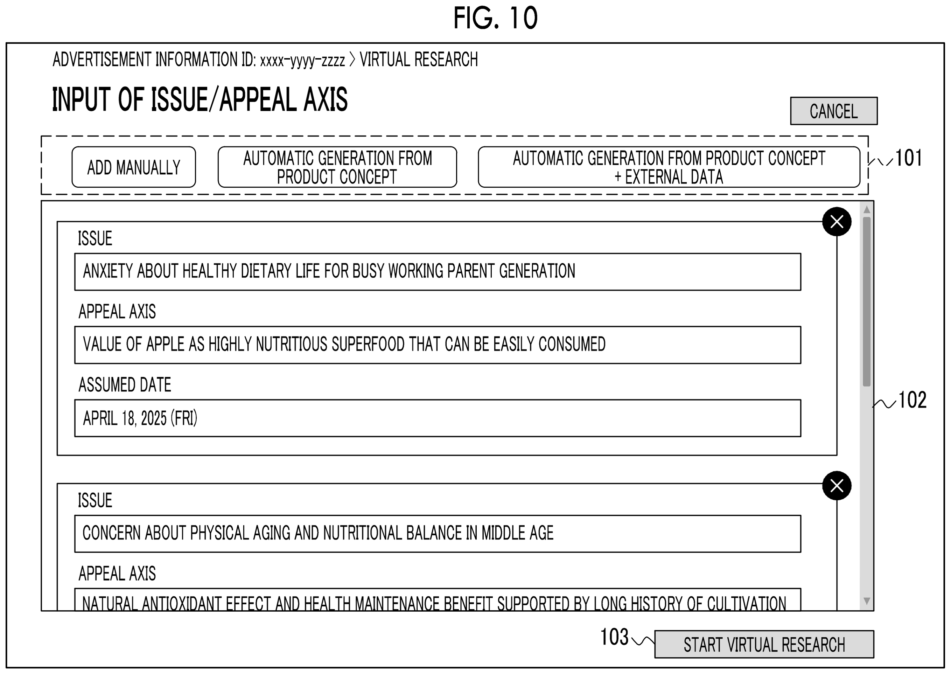

Subsequently, in a case where the user selects an issue/appeal axis input button 92 on the screen shown in FIG. 9, an issue/appeal axis setting screen shown in FIG. 10 is displayed.

The virtual research execution unit 63 generates appeal strength information by using the appeal strength information generation unit 631 in order to effectively conduct the virtual research (step S140). As described above, in the present exemplary embodiment, the issue and the appeal axis are set as the appeal strength information. The reason for setting the issue and the appeal axis is that, in the virtual research, rather than simply asking the user (here, the persona) about the appeal of the product based on the product concept information, the appeal of the product (that is, the issue and the appeal axis) is clarified and the user is asked whether the user is interested in the product with such appeal. As a method of setting the appeal strength information, in the present exemplary embodiment, the appeal strength information can be set by three methods. This is to allow the user to select one of setting method selection buttons displayed in a button display region 101 of the screen shown in FIG. 10.

A first method is that the user selects "add manually" and manually inputs the appeal strength information in a display region 102 of the appeal strength information. A second method is that the user selects "automatic generation from product concept" and causes the generative AI to generate the appeal strength information. That is, the appeal strength information generation unit 631 acquires information output by inputting the information related to the personas constituting the persona pool, the product concept information, and the segment information to the generative AI, as the appeal strength information. The appeal strength information acquired in this way is displayed in the display region 102. A third method is that the user selects "automatic generation from product concept + external data" and causes the generative AI to generate the appeal strength information. That is, the appeal strength information generation unit 631 causes the generative AI to generate the appeal strength information as in the second method, but, in the third method, the external data is further added to the input information. For example, the personal attributes of the prospective customer can be specified from the segment information, and the search history information of the prospective customer who has actually searched for the information (for example, Web or advertisement) related to the product can be acquired. Therefore, the external data to be input to the generative AI is objective external data such as search history information of prospective customers belonging to a target segment who have actually searched for the advertisement or the like, for example, the number of clicks on the advertisement or the like. The appeal strength information acquired in this way is displayed in the display region 102.

Incidentally, in the present exemplary embodiment, in a prompt input to the generative AI for generating the appeal strength information, in a case of selling the product to the target segment, it is instructed to output pairs of issues and appeal axes in consideration of five major psychological factors of "extroversion", "conscientiousness", "agreeableness", "openness", and "neuroticism".

In a case where the appeal strength information is generated in the above manner and the user selects a "start virtual research" button 103, the virtual research execution unit 63 starts executing the virtual research (step S150). Specifically, the virtual research execution unit 63 executes the virtual research by inputting the product concept information and the appeal strength information to the generative AI, and acquires the output from the generative AI as an execution result of the virtual research. The execution result of the virtual research is synonymous with the "research result".

Incidentally, in the present exemplary embodiment, in a prompt input to the generative AI that executes the virtual research, it is instructed to output which persona felt what appeal in what situation in the course of ordinary life within a period (for example, within three months from now), reasons for feeling the appeal, and concerns in the purchase.

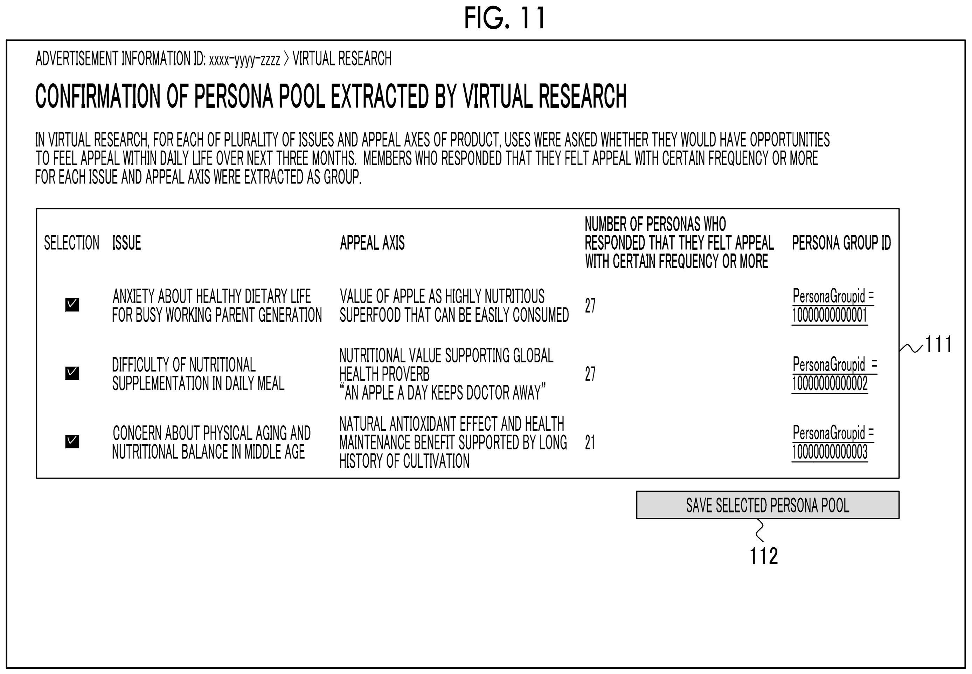

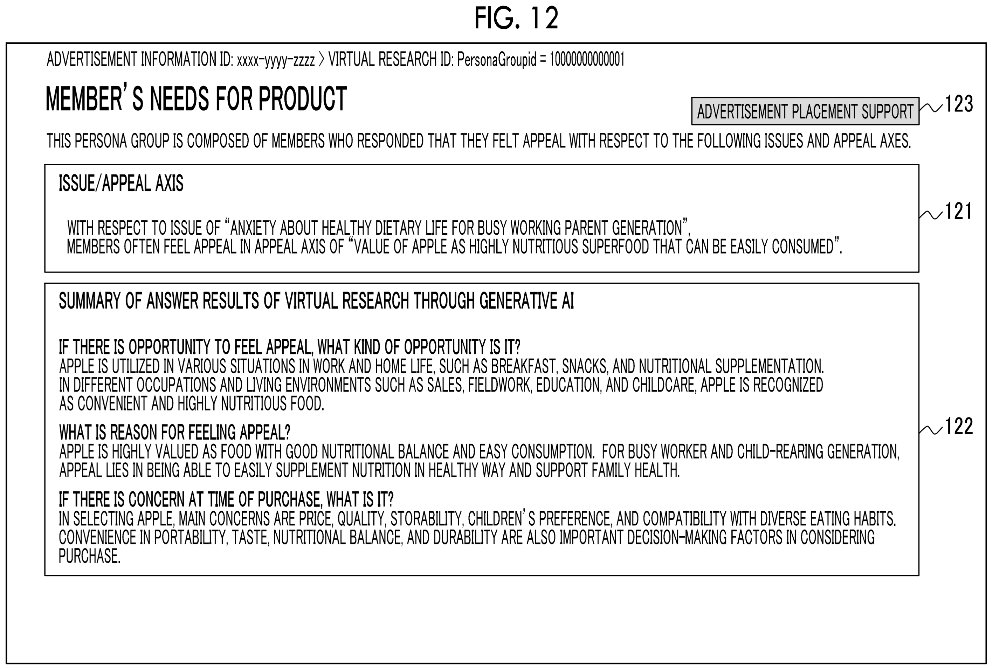

FIG. 11 is a diagram showing a screen display example that displays the execution result of the virtual research. The research result is displayed in a predetermined display region 111. The display information generation unit 64 generates display information of the screen shown in FIG. 11 and display information for screen displays shown in FIGS. 12 to 14 by referring to the execution result of the virtual research. In the present exemplary embodiment, since the generative AI is instructed to generate three pieces of appeal strength information in a case of generating the appeal strength information, three pieces of appeal strength information, that is, pairs of issues and appeal axes are displayed as in the display example shown in FIG. 11. As in the display example shown in FIG. 11, in the virtual research, the number of personas who feel an appeal in the content of the appeal strength information is identified, so that the number is displayed in association with each piece of appeal strength information. In FIG. 11, it is clarified by the virtual research that, among 41 personas (see FIG. 9) constituting the persona pool, the exemplified numbers "27", "27", and "21" represent personas who felt an appeal in the appeal strength information. Incidentally, in the present exemplary embodiment, a set of personas who felt an appeal in the appeal strength information among the personas constituting the persona pool is referred to as a "persona group". The "persona group" is generated for each piece of appeal strength information.

In a case where the user checks an appropriate checkbox corresponding to each piece of appeal strength information at a left end of the display region 111 and then selects a persona group save button 112, the virtual research execution unit 63 saves information related to the appeal strength information for which the checkbox is checked, specifically, the information displayed in the display region 111 or information related to the persona belonging to the persona group in the storage unit 4.

FIG. 12 is a diagram showing an example of screen display generated based on the execution result of the virtual research. FIG. 12 shows a display example in a case where any of the saved pieces of appeal strength information is selected by a predetermined user operation on FIG. 11. In FIG. 12, two display regions 121 and 122 are provided, and the following information is displayed. That is, the appeal strength information (issue/appeal axis) is displayed in the display region 121. The display region 122 shows a summary of answer results of the virtual research. The "execution result" and the "answer result" are synonymous.

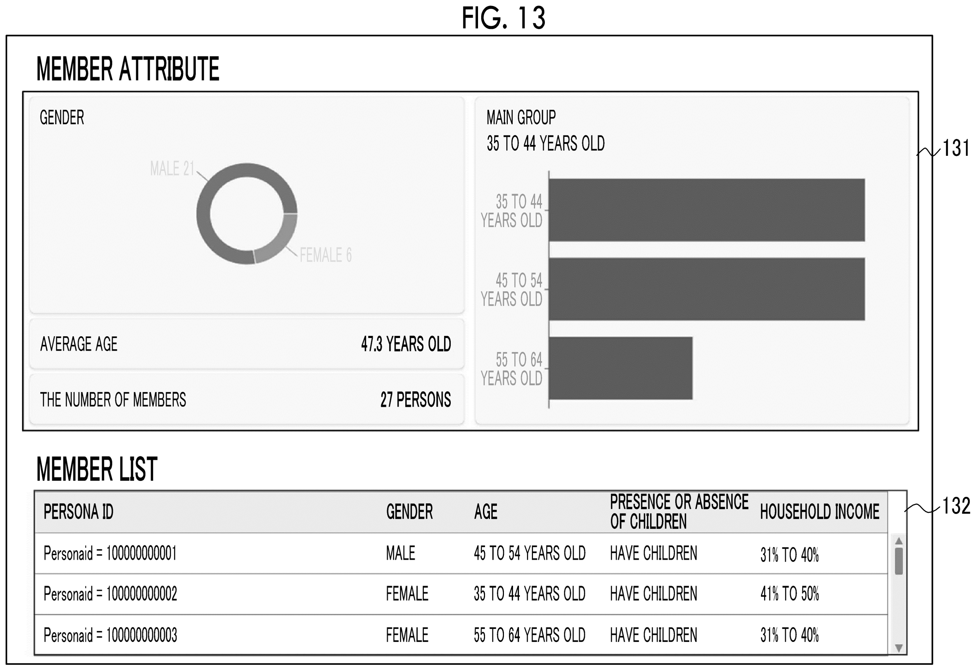

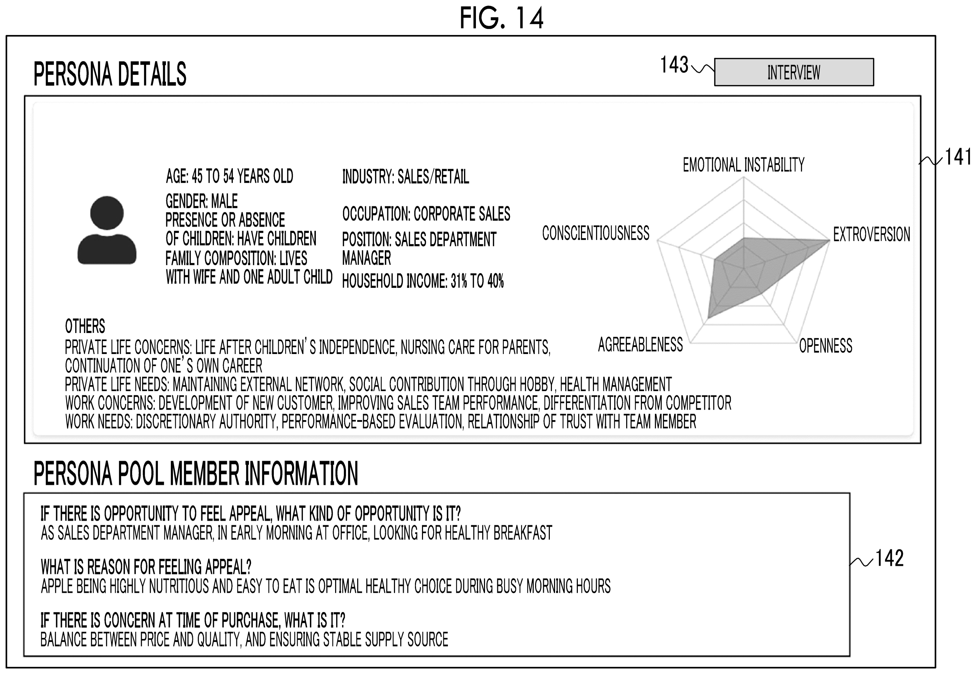

FIG. 13 is a diagram showing another example of screen display showing the execution result of the virtual research. In FIG. 13, in a case where a persona group ID displayed on the screen shown in FIG. 11 is selected, information related to the selected persona group is displayed. In the screen shown in FIG. 13, two display regions 131 and 132 are provided, and the following information is displayed. That is, the display region 131 displays a gender ratio, an average age, the number of members, and an age group of the personas as member attribute information. A list of personas constituting the persona group is displayed in the display region 132. FIG. 14 shows a screen display example in a case where one persona is selected from the list by a predetermined user operation.

In FIG. 14, personal information of the persona is displayed. Attribute information of the persona is displayed in an upper display region 141. The answers obtained from the persona through the virtual research are displayed in a lower display region 142. The user can conduct an interview with this persona by selecting an "interview" button 143.

In the present exemplary embodiment, the information related to the persona group is shown separately in FIGS. 12 to 14, but may be displayed together on one screen.

Returning to FIG. 12, in a case where an "advertisement placement support" button 123 on the screen is selected by the user, the search intention generation unit 651 in the advertisement information processing unit 65 generates search intention information (step S160). Specifically, the search intention generation unit 651 acquires information output by inputting the product concept information, the appeal strength information, and the execution result of the virtual research to the generative AI, as search intention information for the appeal strength information input to the generative AI of the product. The "search intention" is defined as a specific purpose, demand, or the like that the user has in a case of using a search engine to obtain information on the product or to find a solution.

Incidentally, in the present exemplary embodiment, in a prompt input to the generative AI for generating the search intention information, it is instructed to output 10 pairs of the search intention and the reason with which the search intent has affinity.

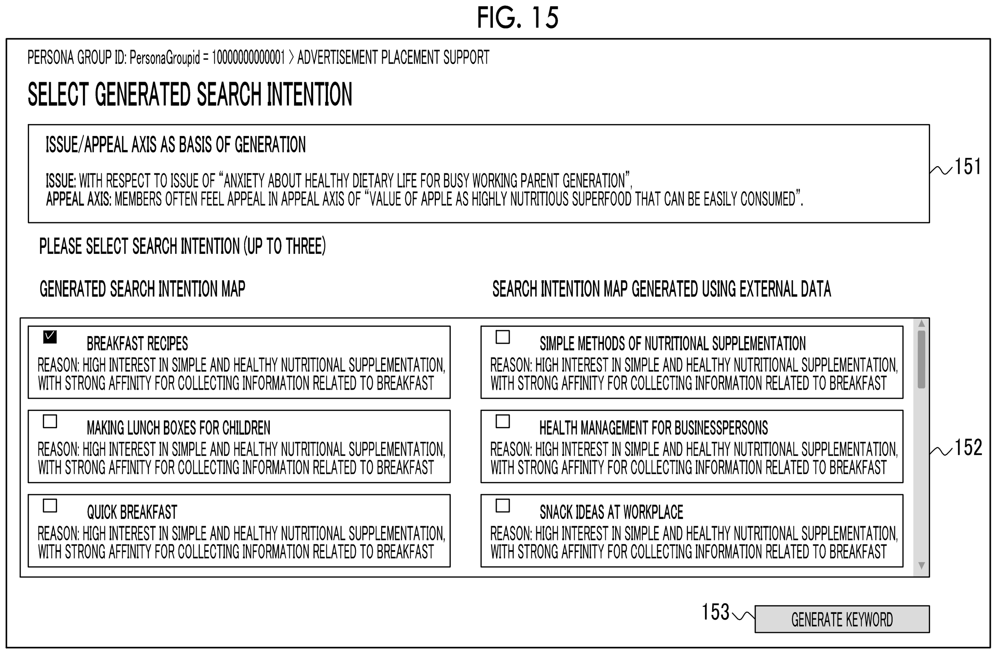

FIG. 15 is a diagram showing a screen display example for the user to select the search intention information. The appeal strength information displayed in the display region 121 in FIG. 12 is displayed in a display region 151 shown in FIG. 15. In addition, the search intention information generated by the search intention generation unit 651 is displayed in a display region 152. The search intention information in the present exemplary embodiment includes pairs of the search intention and the reason. In the display region 152, search intention information generated based on the appeal strength information generated by inputting the external data to the generative AI and search intention information generated based on the appeal strength information generated without reflecting the external data are displayed side by side. According to the screen example shown in FIG. 15, the user selects up to three pieces of appeal strength information from among the pieces of appeal strength information displayed in the display region 152 by checking the checkbox.

After the search intention is selected, in a case where the user selects a "generate keyword" button 153 shown in FIG. 15, the advertisement information processing unit 65 receives the search intention information selected by the user (step S170).

Subsequently, the keyword generation unit 652 generates keyword information (step S180). Specifically, the keyword generation unit 652 acquires information output by inputting the received search intention information to the generative AI, as the keyword information.

Incidentally, in the present exemplary embodiment, in a prompt input to the generative AI for generating the keyword information, it is instructed to output 10 keywords indicating a large category (hereinafter, referred to as "main keywords") and 10 keywords for further narrowing down the category (hereinafter, referred to as "sub-keywords").

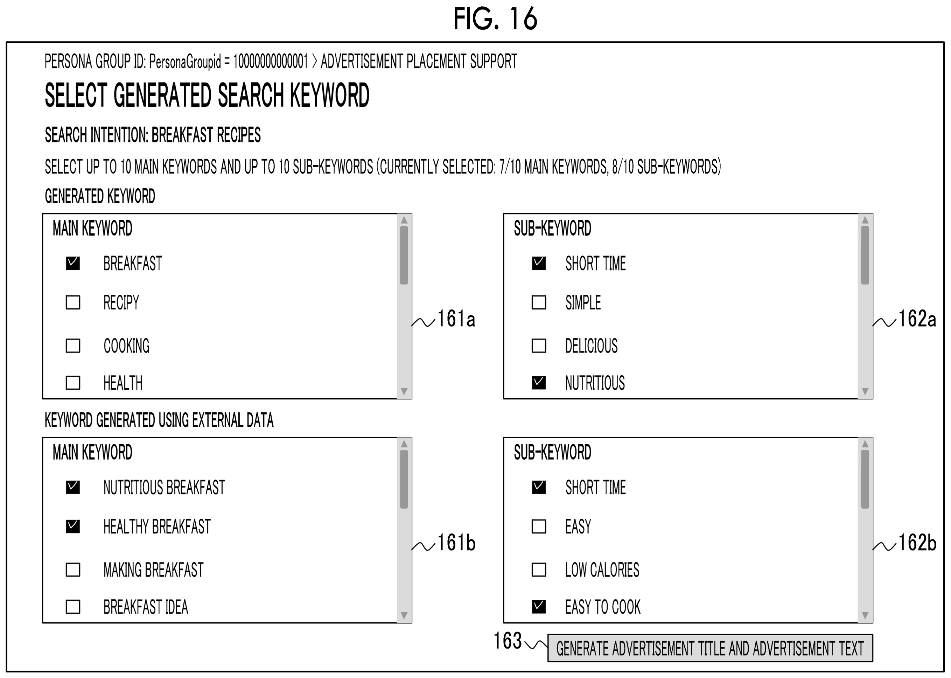

FIG. 16 is a diagram showing a screen display example for the user to select the keyword information. The 10 main keywords are displayed in a scrollable manner in display regions 161a and 161b shown in FIG. 16. In addition, the 10 sub-keywords are displayed in a scrollable manner in display regions 162a and 162b. In addition, in the present exemplary embodiment, as in the search intention information, the display regions 161a and 161b for the keyword information generated based on the appeal strength information generated without reflecting the external data and the display regions 162a and 162b doe the keyword information generated based on the appeal strength information generated by inputting the external data to the generative AI are displayed to be arranged vertically. According to the screen example shown in FIG. 16, by checking the checkbox, the user can select up to 10 main keywords from among the main keywords displayed in the display regions 161a and 161b, and up to 10 sub-keywords from among the sub-keywords displayed in the display regions 162a and 162b.

After the keyword is selected, in a case where the user selects a button 163 for generating the advertisement information provided on the screen shown in FIG. 16, the advertisement information processing unit 65 receives the main keyword and the sub-keyword selected by the user (step S190).

As described above, in a case where the keyword selected by the user is received, the advertisement information processing unit 65 generates advertisement information (step S200). In the present exemplary embodiment, an advertisement title and an advertisement text are generated as the advertisement information. Therefore, the advertisement information processing unit 65 acquires information output by inputting the product concept information, the segment information, the execution result of the virtual research, the search intention information, and the keyword information to the generative AI, as the advertisement information (step S200).

Incidentally, in the present exemplary embodiment, in a prompt input to the generative AI for generating the advertisement information, it is instructed to output the advertisement title and the advertisement text (for example, five drafts each) that are considered to be likely to attract the interest of the target user who can be specified from the segment information within a designated number of characters and in a predetermined output format.

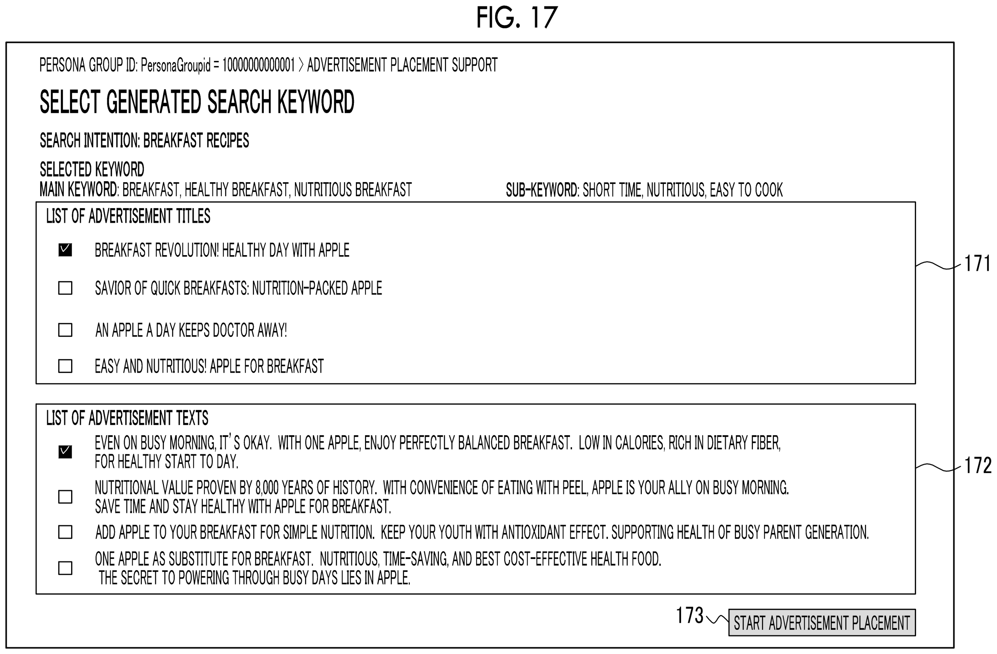

FIG. 17 is a diagram showing a screen display example for the user to select advertisement information used for advertisement placement. A list of advertisement titles generated by the generative AI is displayed in a display region 171 shown in FIG. 17. A list of advertisement texts generated by the generative AI is displayed in a display region 172. The user selects the advertisement title and the advertisement text to be displayed in the advertisement from the display regions 171 and 172 by checking the checkboxes.

After the advertisement title and the advertisement text are selected, in a case where the user selects a "start advertisement placement" button 173 provided on the screen shown in FIG. 17, the advertisement information processing unit 65 receives the advertisement title and the advertisement text selected by the user (step S210). Then, the advertisement placement processing unit 653 places the advertisement using the received advertisement title and advertisement text by actually displaying the advertisement on the company's own Web page or the advertisement page. Then, information related to the response of the user to the placed advertisement is acquired (step S220).

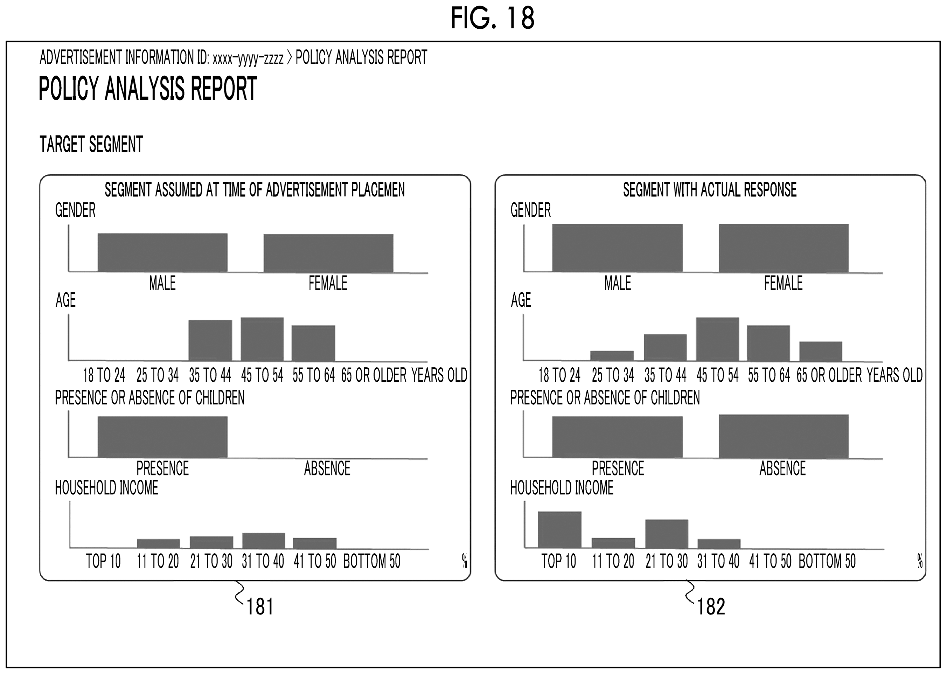

FIG. 18 is a diagram showing a screen display example of a policy analysis report including comparison information generated by analyzing information related to the response of the prospective customer to the advertisement. The comparison information refers to information that includes statistical information assumed at the time of the advertisement placement and statistical information obtained from actual response to the advertisement in a comparable manner. In FIG. 18, segment information is displayed as an example of the comparison information. That is, segment information assumed to be obtained by placing the advertisement generated by the above-described processing is displayed in a display region 181 in FIG. 18. On the other hand, segment information generated by performing statistical processing with reference to the actual response (for example, a click rate, a conversion rate, and a cost efficiency) of the user (that is, the "prospective customer") to the advertisement as a result of placing the advertisement generated by the above-described processing is displayed in a display region 182. In marketing, for example, it is preferable to obtain results as expected, but, in reality, deviations often occur, as in the comparison information displayed on the screen shown in FIG. 18.

Therefore, the evaluation unit 66 acquires information output by inputting the comparison information to the generative AI, as analysis information of the advertisement information. Incidentally, in the exemplary embodiment, in a prompt input to the generative AI for generating the analysis information, it is instructed to specify a viewpoint of analysis and to output, as the analysis information, overall performance evaluation and advice on improvement points. The analysis information acquired by the evaluation unit 66 may be included in the policy analysis report and displayed on the screen.

According to the present exemplary embodiment, as described above, the virtual research is executed, the advertisement based on the execution result is generated and placed, and the advertisement is evaluated. The above-described processing cycle may be reviewed as appropriate so that feedback can be provided. For example, the user can easily improve the advertisement by reviewing the selection of the product information, the segment information, and the appeal strength information. In particular, in the present exemplary embodiment, by extracting from the pre-generated persona pool, which is a population of personas generated in advance based on actual Japanese statistical information, a persona pool to be a target of the virtual research can be easily generated. That is, it is no need to generate, for each product to be researched, a persona to be a target of the virtual research for the product each time and generate the persona pool.

In the present exemplary embodiment, an example has been described in which the virtual questionnaire is conducted on the advertisement of the product, and the advertisement is generated and placed based on the result, but, in a case where the example of the resource is not the product but the blog article or the like, the resource itself, that is, the content of the blog article may be generated based on the result of the virtual questionnaire.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

### (Supplementary Note)

(((1))) An information processing system comprising:
   a processor configured to:
   input information related to virtual human profiles constituting a population that has been generated in advance and resource information related to resources to a learning model and acquire a set of virtual human profiles extracted from the population;
   execute research on the resource with respect to the set; and
   output a result of the research.
(((2))) The information processing system according to (((1))), wherein the processor is configured to:
   input, to the learning model, the information related to the virtual human profiles and the resource information together with narrowing information including statistical information related to the virtual human profiles and acquire a set of virtual human profiles extracted from the population.
(((3))) The information processing system according to (((2))), wherein the processor is configured to:
   adjust the statistical information included in the narrowing information by referring to statistical information related to a prospective customer of the resources.
(((4))) The information processing system according to (((3))), wherein the processor is configured to:
   set an importance of the statistical information related to the prospective customer that is used for adjusting the statistical information included in the narrowing information.
(((5))) The information processing system according to (((3))) or (((4))), wherein the processor is configured to:
   acquire information output by inputting information related to the virtual human profiles constituting the set, the resource information, and the statistical information to the learning model, as appeal strength information indicating an appeal strength of the resources in an advertisement.
(((6))) The information processing system according to (((5))), wherein the processor is configured to:
   input the resource information to the learning model after including search history information of the prospective customer in the resource information.
(((7))) The information processing system according to (((5))) or (((6))), wherein the processor is configured to:
   execute the research by inputting the resource information and the appeal strength information to the learning model.
(((8))) The information processing system according to (((2))), wherein the processor is configured to:
   acquire appeal strength information indicating an appeal strength of the resources in an advertisement; and
   generate advertisement information of the resources based on the resource information, the appeal strength information, and the result of the research.
(((9))) The information processing system according to (((8))), wherein the processor is configured to:
   generate search keyword information based on the result of the research; and
   generate the advertisement information of the resources by referring to the search keyword information.
(((10))) The information processing system according to (((9))), wherein the processor is configured to:
   acquire information output by inputting the resource information, the appeal strength information, and the result of the research to the learning model, as search intention information indicating a search intention for the resources; and
   acquire information output by inputting the search intention information to the learning model, as the search keyword information.
(((11))) The information processing system according to (((8))), wherein the processor is configured to:
   output comparison information that includes the statistical information used to generate the advertisement information and statistical information related to a prospective customer who has viewed the advertisement information in a comparable manner, and acquire information output by inputting the comparison information to the learning model, as analysis information of the advertisement information.
(((12))) The information processing system according to any one of (((1))) to (((11))), wherein the processor is further configured to:
   set the number of virtual human profiles to be input to the learning model.
(((13))) A program causing a computer to execute:
   a function of inputting information related to virtual human profiles constituting a population that has been generated in advance and resource information related to resources to a learning model and acquiring a set of virtual human profiles extracted from the population;
   a function of executing research on the resource with respect to the set; and
   a function of outputting a result of the research.

According to the aspect (((1))), it is possible to avoid generating a virtual human profile serving as a subject of research on a resource, each time the research is conducted.

According to the aspect (((2))), it is possible to acquire a set of virtual human profiles by referring to the statistical information related to the virtual human profiles.

According to the aspect (((3))), it is possible to increase reliability of the statistical information.

According to the aspect (((4))), it is possible to set a degree to which the statistical information to be included in the narrowing information is adjusted according to the importance.

According to the aspect (((5))), it is possible to cause the learning model to generate the appeal strength information of the resources.

According to the aspect (((6))), it is possible to cause the learning model to generate the appeal strength information of the resources by further referring to the search history information.

According to the aspect (((7))), it is possible to cause the learning model to execute the research for the set.

According to the aspect (((8))), it is possible to generate the advertisement information based on the resource information, the appeal strength information, and the result of the research.

According to the aspect (((9))), it is possible to generate the advertisement information of the resources by referring to the search keyword.

According to the aspect (((10))), it is possible to generate the search keyword information used for generating the advertisement information by using the learning model.

According to the aspect (((11))), it is possible to cause the learning model to generate an analysis result of the advertisement information.

According to the aspect (((12))), it is possible to set the number of virtual human profiles referred to for generating the set.

According to the aspect (((13))), it is possible to avoid generating a virtual human profile serving as a subject of research on a resource, each time the research is conducted.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

2: user interface (UI) unit
4: storage unit
6: information processing unit
8: network
10: information processing apparatus
61: basic information generation unit
62: persona pool generation unit
63: virtual research execution unit
64: display information generation unit
65: advertisement information processing unit
66: evaluation unit
611: product information generation unit
612: segment information generation unit
631: appeal strength information generation unit
651: search intention generation unit
652: keyword generation unit
653: advertisement placement processing unit

## Claims

1. An information processing system comprising:
a processor configured to:
input information related to virtual human profiles constituting a population that has been generated in advance and resource information related to resources to a learning model and acquire a set of virtual human profiles extracted from the population;
execute research on the resource with respect to the set; and
output a result of the research.

2. The information processing system according to claim 1, wherein the processor is configured to:
input, to the learning model, the information related to the virtual human profiles and the resource information together with narrowing information including statistical information related to the virtual human profiles and acquire a set of virtual human profiles extracted from the population.

3. The information processing system according to claim 2, wherein the processor is configured to:
adjust the statistical information included in the narrowing information by referring to statistical information related to a prospective customer of the resources.

4. The information processing system according to claim 3, wherein the processor is configured to:
set an importance of the statistical information related to the prospective customer that is used for adjusting the statistical information included in the narrowing information.

5. The information processing system according to claim 3 or 4, wherein the processor is configured to:
acquire information output by inputting information related to the virtual human profiles constituting the set, the resource information, and the statistical information to the learning model, as appeal strength information indicating an appeal strength of the resources in an advertisement.

6. The information processing system according to claim 5, wherein the processor is configured to:
input the resource information to the learning model after including search history information of the prospective customer in the resource information.

7. The information processing system according to claim 5 or 6, wherein the processor is configured to:
execute the research by inputting the resource information and the appeal strength information to the learning model.

8. The information processing system according to claim 2, wherein the processor is configured to:
acquire appeal strength information indicating an appeal strength of the resources in an advertisement; and
generate advertisement information of the resources based on the resource information, the appeal strength information, and the result of the research.

9. The information processing system according to claim 8, wherein the processor is configured to:
generate search keyword information based on the result of the research; and
generate the advertisement information of the resources by referring to the search keyword information.

10. The information processing system according to claim 9, wherein the processor is configured to:
acquire information output by inputting the resource information, the appeal strength information, and the result of the research to the learning model, as search intention information indicating a search intention for the resources; and
acquire information output by inputting the search intention information to the learning model, as the search keyword information.

11. The information processing system according to claim 8, wherein the processor is configured to:
output comparison information that includes the statistical information used to generate the advertisement information and statistical information related to a prospective customer who has viewed the advertisement information in a comparable manner, and acquire information output by inputting the comparison information to the learning model, as analysis information of the advertisement information.

12. The information processing system according to any one of claims 1 to 11, wherein the processor is further configured to:
set the number of virtual human profiles to be input to the learning model.

13. A program causing a computer to execute:
a function of inputting information related to virtual human profiles constituting a population that has been generated in advance and resource information related to resources to a learning model and acquiring a set of virtual human profiles extracted from the population;
a function of executing research on the resource with respect to the set; and
a function of outputting a result of the research.

14. An information processing method comprising:
inputting information related to virtual human profiles constituting a population that has been generated in advance and resource information related to resources to a learning model and acquiring a set of virtual human profiles extracted from the population;
executing research on the resource with respect to the set; and
outputting a result of the research.
